# EUROPEAN PATENT APPLICATION

(11) **EP 4 803 569 A1**
(43) Date of publication of application: **09.09.2026**
(21) Application number: 24928718.6
(22) Date of filing: 31.12.2024
(51) Int. Cl.: C08K 3/30, C08L 15/00, C08K 3/013, C08J 7/04, C09D 183/04, C09D 5/18, B29C 48/00, B29C 48/08

(54) **COMPOSITION FOR BODY CONTACT COMPONENT OF WEARABLE DEVICE AND BODY CONTACT COMPONENT OF WEARABLE DEVICE USING SAME AND METHOD FOR MANUFACTURING SAME**

(30) Priority: 07.03.2024 KR 20240032472; 11.04.2024 KR 20240048826
(71) Applicant: Samsung Electronics Co., Ltd., Suwon-si, Gyeonggi-do 16677 (KR)
(72) Inventor: KIM, Younggyun, Suwon-si Gyeonggi-do 16677 (KR); SON, Suyeong, Suwon-si Gyeonggi-do 16677 (KR); HONG, Ingook, Suwon-si Gyeonggi-do 16677 (KR)
(74) Representative: Nederlandsch Octrooibureau
(86) International application number: PCT/KR2024/021530
(87) International publication number: WO 2025/187920

(57) **Abstract**

A composition for a body contact component of a wearable device, a body contact component of a wearable device, a strap of a wearable device, and a method of manufacturing a body contact component of a wearable device are provided. The composition for a body contact component of a wearable device includes hydrogenated nitrile butadiene rubber (HNBR), and a high-specific-gravity inorganic additive, wherein the composition has a specific gravity in a range of 1.5 to 2.0.

## Description

### Technical Field

The disclosure relates to a composition for a body contact component of a wearable device, a body contact component of a wearable device manufactured using the same, and a method for manufacturing the same.

### Background Art

The use of wearable electronic devices is increasing. As an example of a wearable electronic device, a smart watch includes a strap portion, which contacts the wrist. For the strap portion, a fluoroelastomer (FKM), which has excellent chemical resistance, heat resistance, and mechanical properties, is typically used as a material. Since an FKM has a high specific gravity of about 1.9, it has excellent wrapping properties and wearing comfort.

While an FKM has these advantages, it is formed of per- and polyfluoroalkyl substances (PFAS), and therefore contains strong bonds between carbon and fluorine atoms. Thus, they have characteristics of being difficult to combust, corrode, or decompose naturally. In particular, PFAS are known to cause liver damage, kidney cancer, and thyroid disease when accumulated in the human body.

### Disclosure of the Invention

### Technical Solutions

According to an aspect of the disclosure, a composition for a body contact component of a wearable device may include hydrogenated nitrile butadiene rubber (HNBR) and a high-specific gravity inorganic additive. The composition may have a specific gravity in a range of 1.5 to 2.0.

According to an aspect of the disclosure, a composition for a body contact component of a wearable device may include, based on 100 parts by weight of the composition, 60 parts by weight to 70 parts by weight of HNBR, and 30 parts by weight to 40 parts by weight of barium sulfate. The HNBR may have an acrylonitrile content in a range of 35% parts by weight to 45% parts by weight, based on 100 parts by weight of the HNBR, and the HNBR may have a residual double bond content in a range of 1.8% to 2.0%. The composition may have a specific gravity in a range of 1.5 to 1.7.

According to an aspect of the disclosure, a body contact component of a wearable device may include HNBR, and a high-specific gravity inorganic additive. The body contact component may have a specific gravity in a range of 1.5 to 2.0.

According to an aspect of the disclosure, a strap of a wearable device may include HNBR, barium sulfate, and a silicone coating layer formed on an outermost surface of the strap. Based on 100 parts by weight of the strap, the strap may include 60 parts by weight to 70 parts by weight of HNBR, and 30 parts by weight to 40 parts by weight of the barium sulfate. The HNBR may have an acrylonitrile content in a range of 35% parts by weight to 45% parts by weight, based on 100 parts by weight of the HNBR, and the HNBR may have a residual double bond content in a range of 1.8% to 2.0%. The strap may have a specific gravity in a range of 1.5 to 1.7, the strap may have a tensile strength in a range of 10 MPa to 20 MPa, and the strap may have a surface hardness in a range of 60 Shore hardness to 75 Shore hardness. The coating layer may be a transparent layer having a thickness in a range of 10 µm to 30 µm, the coating layer may have a heat resistance equal to or greater than 100°C, and the coating layer a surface roughness equal to or less than 20 µm.

According to an aspect of the disclosure, a method of manufacturing a body contact component of a wearable device may include: preparing a composition by mixing HNBR and a high-specific gravity inorganic additive; manufacturing a sheet by extruding the composition; compress-molding the sheet; manufacturing a molded product by cutting the compress-molded sheet; forming a coating layer on a surface of the molded product; and drying the molded product on which the coating layer is formed.

### BRIEF DESCRIPTION OF DRAWINGS

FIG. 1 is a schematic block diagram of an electronic device in a network environment according to embodiments;
FIGS. 2a and 2b are schematic perspective views of an electronic device according to embodiments;
FIG. 3 is an exploded schematic perspective view of an electronic device according to embodiments;
FIG. 4 is a schematic diagram of a smart watch strap according to embodiments;
FIG. 5 is a schematic diagram of a smart watch including a smart watch strap according to embodiments, when it is worn;
FIG. 6 is an enlarged schematic diagram of a portion of a body contact component of a wearable device according to embodiments that contacts a head of a head mount; and
FIG. 7 is a schematic diagram of a method of manufacturing a smart watch strap according to embodiments.

### Best Mode for Carrying Out the Invention

Hereinafter, embodiments are described in detail with reference to the accompanying drawings. When describing the embodiments with reference to the accompanying drawings, like reference numerals refer to like elements, and a repeated description related thereto is omitted.

It should be appreciated that various embodiments of the disclosure and the terms used therein are not intended to limit the technical features set forth herein to particular embodiments and include various changes, equivalents, or replacements for a corresponding embodiment. With regard to the description of the drawings, similar reference numerals may be used to refer to similar or related elements. The singular form of a noun corresponding to an item may include one or more of the items, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms, such as "first" or "second", are simply used to distinguish a component from another component and do not limit the components in other aspects (e.g., importance or sequence). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, a module may be implemented in a form of an application-specific integrated circuit (ASIC).

Various embodiments may be implemented as software (e.g., a program 140) including one or more instructions that are stored in a storage medium (e.g., internal memory 136 or external memory 138) that is readable by a machine (e.g., an electronic device). For example, a processor of the machine (e.g., the electronic device) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. , multiple components (e.g., modules or programs) may be integrated into a single component. The integrated component may still perform one or more functions of each of the components in the same or similar manner as they are performed by a corresponding one of the components before the integration. According to embodiments, operations performed by the module, the program, or another component may be carried out sequentially, in parallel, repeatedly, or heuristically, or one or more of the operations may be executed in a different order or omitted, or one or more other operations may be added.

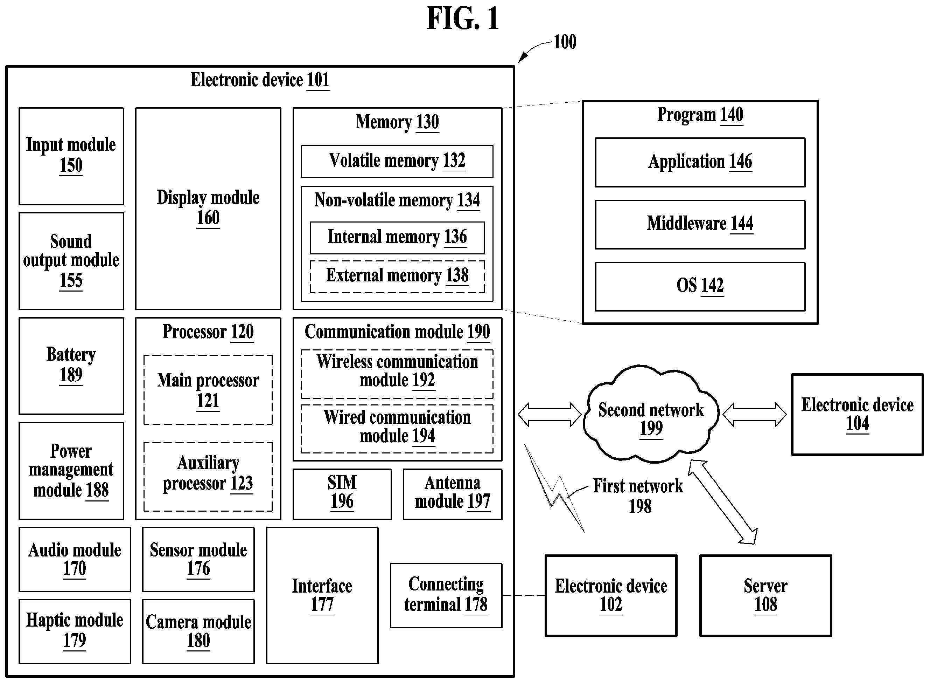

FIG. 1 is a schematic block diagram of an electronic device 101 in a network environment 100 according to embodiments.

Referring to FIG. 1, the electronic device 101 in the network environment 100 may communicate with an electronic device 102 via a first network 198 (e.g., a short-range wireless communication network), or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In embodiments, at least one of the components (e.g., the connecting terminal 178) may be omitted from the electronic device 101, or one or more other components may be added to the electronic device 101. In embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to consume less power than the main processor 121 or to be dedicated for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., an NPU) may include a hardware structure specified for artificial intelligence (AI) model processing. An AI model may be generated through machine learning. Such learning may be performed, for example, by the electronic device 101 in which an AI model is executed, or via a separate server (e.g., the server 108). Learning algorithms may include, but are not limited to, e.g., supervised learning, unsupervised learning, semi-supervised learning, or reinforcement learning. The AI model may include multiple artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof, but embodiments are not limited thereto. The AI model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from outside (e.g., a user) the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for various purposes, such as playing multimedia or playing a recording. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electric signal or vice versa. According to an embodiment, the audio module 170 may obtain the sound via the input module 150 or output the sound via the sound output module 155 or via an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector through which the electronic device 101 may be physically connected to an external electronic device (e.g., the electronic device 102). According to an embodiment, the connecting terminal 178 may include, for example, an HDMI connector (port), a USB connector (port), an SD card connector (port), or an audio connector (e.g., a headphone connector or port).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and dynamic images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell that is not rechargeable, a secondary cell that is rechargeable, or a fuel cell.

The communication module 190 may support the establishment of a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device). According to an embodiment, the antenna module 197 may include an antenna including a radiating element including a conductive material or a conductive pattern formed in or on a substrate (e.g., a printed circuit board (PCB)). According to an embodiment, the antenna module 197 may include multiple antennas (e.g., array antennas). At least one antenna appropriate for a communication scheme used in the communication network, such as the first network 198 or the second network 199, may be selected, for example, by the communication module 190 (e.g., the wireless communication module 192) among the antennas. The signal or power may be transmitted or received between the communication module 190 and the external electronic device via the selected at least one antenna. According to embodiments, another component (e.g., a radio frequency integrated circuit (RFIC)) other than the radiating element may be additionally formed as part of the antenna module 197.

According to embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and multiple antennas (e.g., array antennas) disposed on a second surface (e.g., the top or a side surface) of the PCB, or adjacent to the second surface and capable of transmitting or receiving signals of the designated high-frequency band.

At least some of the components described above may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as or a different type from the electronic device 101. According to an embodiment, all or some of operations to be executed by the electronic device 101 may be executed by one or more of the external electronic devices 102 and 104, or the server 108. For example, if the electronic device 101 should perform a function or a service automatically, or in response to a request from a user or another device, the electronic device 101, instead of, or in addition to, executing the function or the service, may request the one or more external electronic devices 102 and 104 or the server 108 to perform at least part of the function or the service. The one or more external electronic devices 102 and 104 or the server 108 receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiments may be one of various types of electronic devices. Examples of the electronic device may include, for example, a portable communication device (e.g., a smartphone), a computer device, a portable multimedia device, a portable medical device, a camera, a wearable device, or a home appliance. According to an embodiment, the electronic devices are not limited to those described above.

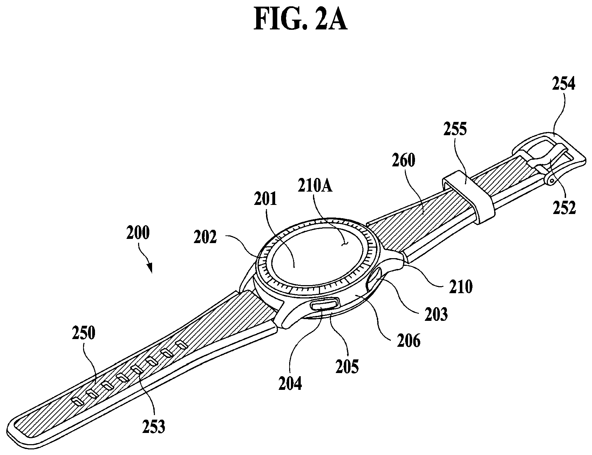

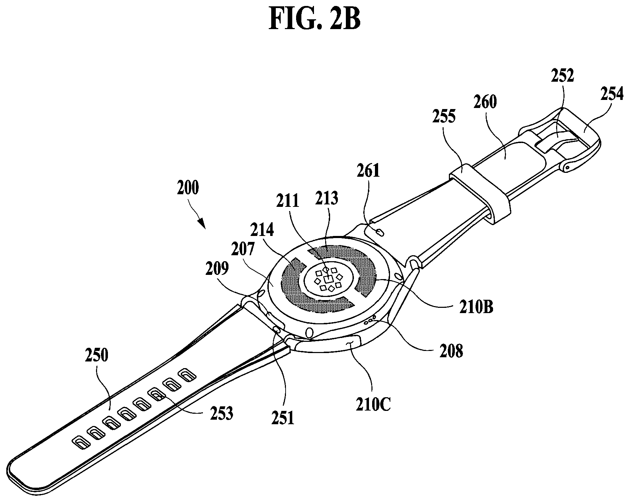

Referring to FIGS. 2a and 2b, according to an embodiment, an electronic device 200 (e.g., the electronic device 101 of FIG. 1) may include a housing 210 that includes a first surface (or a front surface) 210A, a second surface (or a rear surface) 210B, and a side surface 210C surrounding a space between the first surface 210A and the second surface 210B, and fastening members 250 and 260 connected to at least a portion of the housing 210 and configured to detachably attach the electronic device 200 to a body part (e.g., a wrist or an ankle) of a user. In another embodiment (not shown), the housing may also refer to a structure that forms a portion of the first surface 210A, the second surface 210B, and the side surface 210C of FIGS. 2A and 2B. According to an embodiment, the first surface 210A may be formed by a front plate 201 (e.g., a glass plate or a polymer plate including various coating layers) of which at least a portion is substantially transparent. The second surface 210B may be formed by a rear plate 207 that is substantially opaque. The rear plate 207 may be formed of, for example, coated or colored glass, ceramic, polymer, metal (e.g., aluminum, stainless steel (SS), or magnesium), or a combination of at least two thereof. The side surface 210C may be coupled to the front plate 201 and the rear plate 207 and may be formed by a side bezel structure (or a "side member") 206 including a metal and/or a polymer. In embodiments, the rear plate 207 and the side bezel structure 206 may be integrally formed and may include a same material (e.g., a metal material such as aluminum). The fastening members 250 and 260 may be formed of various materials and may have various shapes. The fastening members 250 and 260 may be formed of woven fabric, leather, rubber, urethane, metal, ceramic, or a combination of at least two of the aforementioned materials and may be implemented in an integrated form or with multiple unit links that are movable relative to each other.

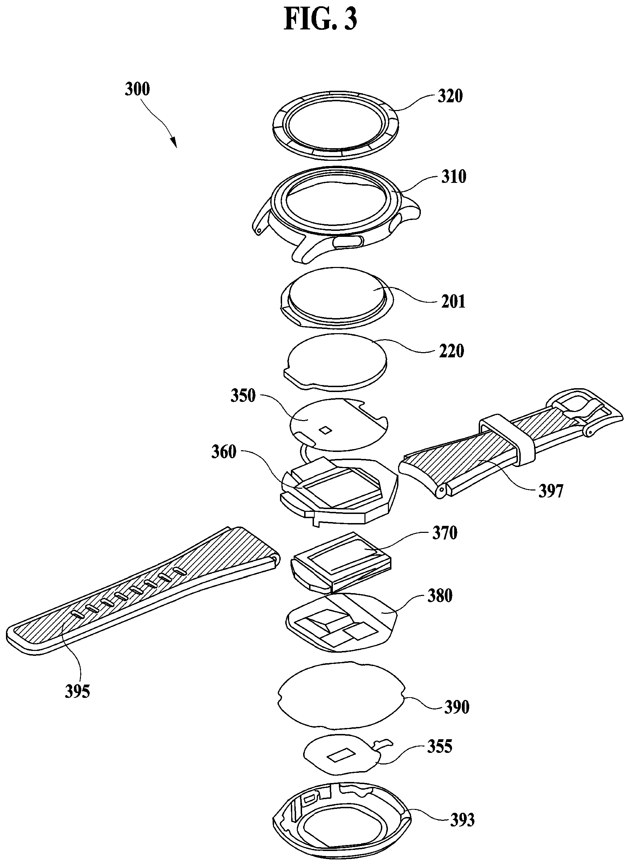

According to an embodiment, the electronic device 200 may include at least one of a display 220 (refer to FIG. 3), audio modules 205 and 208, a sensor module 211, key input devices 202, 203, and 204, and a connector hole or port 209. In embodiments, the electronic device 200 may not include at least one (e.g., the key input devices 202, 203, and 204, the connector hole or port 209, or the sensor module 211) of the components, or may additionally include other components.

The display 220 may be exposed through, for example, some portions of the front plate 201. The display 220 may have a shape corresponding to a shape of the front plate 201, and may have various shapes such as a circle, an oval, or a polygon. The display 220 may be coupled to or disposed adjacent to a touch sensing circuit, a pressure sensor capable of measuring an intensity (or pressure) of a touch, and/or a fingerprint sensor.

The audio modules 205 and 208 may include a microphone hole 205 and a speaker hole 208. A microphone for acquiring an external sound may be disposed in the microphone hole 205. In embodiments, multiple microphones may be disposed to detect a direction of a sound. The speaker hole 208 may be used as an external speaker and a call receiver for calls. In embodiments, the speaker hole 208 and the microphone hole 205 may be implemented as a single hole, or a speaker (e.g., a piezo speaker) may be included without the speaker hole 208.

The sensor module 211 may generate an electrical signal or a data value corresponding to an internal operating state of the electronic device 200 or an external environmental state. The sensor module 211 may include, for example, a biometric sensor module 211 (e.g., a heart rate monitor (HRM) sensor) disposed on the second surface 210B of the housing 210. The electronic device 200 may further include at least one of sensor modules (not shown), for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The sensor module 211 may include electrode areas 213 and 214 that form a portion of the surface of the electronic device 200 and a biosignal detection circuit (not shown) electrically connected to the electrode areas 213 and 214. For example, the electrode areas 213 and 214 may include a first electrode area 213 and a second electrode area 214 disposed on the second surface 210B of the housing 210. The sensor module 211 may be configured such that the electrode areas 213 and 214 obtain an electrical signal from a body part of the user, and the biosignal detection circuit detects biometric information of the user based on the electrical signal.

The key input devices 202, 203, and 204 may include a wheel key 202 disposed on the first surface 210A of the housing 210 and rotatable in at least one direction, and/or side key buttons 203 and 204 disposed on the side surface 210C of the housing 210. The wheel key may have a shape corresponding to the shape of the front plate 201. In another embodiment, the electronic device 200 may not include some or all of the above-described key input devices 202, 203, 204, and the key input devices 202, 203, and 204 that are not included may be implemented in other forms such as soft keys on the display 220. The connector port 209 may include another connector port (not shown) that accommodates a connector (e.g., a universal serial bus (USB) connector) for transmitting and receiving power and/or data to and from an external electronic device and accommodates a connector for transmitting and receiving an audio signal to and from an external electronic device. The electronic device 200 may further include, for example, a connector cover (not shown) that covers at least a portion of the connector hole or port 209 and blocks infiltration of external foreign materials into the connector hole or port 209.

The fastening members 250 and 260 may be detachably fastened to at least a partial area of the housing 210 using locking members 251 and 261. The fastening members 250 and 260 may include one or more of a fixing member 252, a fixing member fastening hole 253, a band guide member 254, and a band fixing ring 255.

The fixing member 252 may be configured to fix the housing 210 and the fastening members 250 and 260 to a part (e.g., a wrist, an ankle, etc.) of the user's body. The fixing member fastening hole 253 may correspond to the fixing member 252 to fix the housing 210 and the fastening members 250 and 260 to the part of the user's body. The band guide member 254 may be configured to limit a range of a movement of the fixing member 252 when the fixing member 252 is fastened to the fixing member fastening hole 253, so that the fastening members 250 and 260 may be fastened to the part of the user's body in a state of being brought into close contact with the part of the user's body. The band fixing ring 255 may limit a range of a movement of the fastening members 250, 260 in a state in which the fixing member 252 and the fixing member fastening hole 253 are fastened with each other.

Referring to FIG. 3, an electronic device 300 (e.g., the electronic device 101 of FIG. 1 or the electronic device 200 of FIGS. 2a and 2b) may include a side bezel structure 310, a wheel key 320, a front plate 201, a display 220, a first antenna 350, a second antenna 355, a support member 360 (e.g., a bracket), a battery 370, a PCB 380, a sealing member 390, a rear plate 393, and fastening members 395 and 397. At least one of the components of the electronic device 300 may be the same as or similar to at least one of the components of the electronic device 200 of FIGS. 1, 2a, or 2b, and a duplicate description thereof will not be repeated hereinafter. The support member 360 may be disposed inside the electronic device 300 and connected to the side bezel structure 310, or may be integrally formed with the side bezel structure 310. The support member 360 may be formed of, for example, a metal material and/or a non-metal material (e.g., polymer). The display 220 may be connected to one surface of the support member 360, and the PCB 380 may be connected to another surface of the support member 360. The PCB 380 may be provided with a processor, a memory, and/or an interface mounted thereon. The processor may include, for example, one or more of a CPU, an AP, a GPU, an AP sensor processor, or a CP.

The memory may include, for example, a volatile memory or a non-volatile memory. The interface may include, for example, an HDMI, a USB interface, an SD card interface, and/or an audio interface. For example, the interface may electrically or physically connect the electronic device 300 to an external electronic device, and may include a USB connector, an SD card/multimedia card (MMC) connector, or an audio connector.

The battery 370, which is a device for supplying power to at least one component of the electronic device 300, may include, for example, a non-rechargeable primary battery, a rechargeable secondary battery, or a fuel cell. For example, at least a portion of the battery 370 may be disposed on substantially a same plane as the PCB 380. The battery 370 may be disposed integrally inside the electronic device 200, or disposed detachably from the electronic device 200.

The first antenna 350 may be disposed between the display 220 and the support member 360. The first antenna 350 may include, for example, a near-field communication (NFC) antenna, a wireless charging antenna, and/or a magnetic secure transmission (MST) antenna. For example, the first antenna 350 may perform short-range communication with an external device, wirelessly transmit and receive power used for charging, or transmit a magnetism-based signal including a short-range communication signal or payment data. In another embodiment, an antenna structure may be formed by a portion of the side bezel structure 310 and/or the support member 360, or a combination thereof.

The second antenna 355 may be disposed between the PCB 380 and the rear plate 393. The second antenna 355 may include, for example, an NFC antenna, a wireless charging antenna, and/or an MST antenna. For example, the second antenna 355 may perform short-range communication with an external device, wirelessly transmit and receive power used for charging, or transmit a magnetism-based signal including a short-range communication signal or payment data. In another embodiment, an antenna structure may be formed by a portion of the side bezel structure 310 and/or the rear plate 393, or a combination thereof.

The sealing member 390 may be disposed between the side bezel structure 310 and the rear plate 393. The sealing member 390 may be configured to prevent moisture and foreign materials from being introduced into a space surrounded by the side bezel structure 310 and the rear plate 393 from the outside.

A composition for a body contact component of a wearable device according to an embodiment may include hydrogenated nitrile butadiene rubber (HNBR) and a high-specific gravity inorganic additive, and the composition may have a specific gravity in a range of 1.5 to 2.0.

Fluoroelastomer (FKM) is widely used as a body contact component of a wearable device, but FKM is a per- and polyfluoroalkyl substance (PFAS), and due to strong carbon-fluorine bonds, it does not readily decompose in a natural environment and is thus classified as an environmentally hazardous substance. In consideration of its direct contact with the human body, long-term exposure to is known to cause various diseases. Therefore, there is a technical and industrial need for a component of a body contact component of the wearable device to replace FKM.

Such FKM currently in use has a specific gravity of about 1.9. When considering the wearing comfort of a body contact component of a wearable device, for example, wrap-around feel for a wrist strap, it is desirable for an alternative component to have a comparable specific gravity.

The composition for the body contact component of the wearable device according to an embodiment includes the HNBR and the high-specific gravity inorganic additive. The HNBR is formed by subjecting nitrile butadiene rubber (NBR) (nitrile rubber) to a hydrogenation process, so that it meets the desired aforementioned technical and industrial characteristics in that it is harmless to the human body and eco-friendly.

However, as described above, when the body contact component of the wearable device is used in a form wrapped around or fixed to the wrist or the head, it is desirable that it have a specific gravity equal to or greater than a suitable level. Since the specific gravity of HNBR is only about 0.95, in order to increase specific gravity, the composition for the body contact component of the wearable device of the disclosure includes a high-specific gravity inorganic additive. By adding the high-specific gravity inorganic additive, the composition for the body contact component of the wearable device according to the disclosure has a specific gravity in a range of 1.5 to 2.0.

Ethylene-propylene-diene rubber (EPDM, a ternary copolymer of ethylene, propylene, and diene) and silicone may be considered as applicable components in terms of non-toxicity to the human body and eco-friendliness, but it is desirable to contain the high-specific gravity inorganic additive to have a specific gravity equal to or greater than a suitable level, and the high-specific gravity inorganic additive weakens a bonding force between elastomers to a lower tensile strength. Since EPDM and silicone, aside from HNBR, have low intrinsic tensile strength (EPDM of about 14 MPa, silicone of about 7 MPa), when an amount of the high-specific gravity inorganic additive is included at or greater than a suitable quantity, the overall physical properties, including tensile strength, may be lowered to a suitable level or lower.

For example, the HNBR according to the disclosure not only possesses inherent non-toxicity to the human body and eco-friendliness but also exhibits excellent tensile strength properties (approximately 25 MPa). Accordingly, the HNBR is suitable for the addition of the high-specific gravity inorganic additive and may be implemented as a material according to the disclosure.

In the composition for the body contact component of the wearable device according to an embodiment, the HNBR may have an acrylonitrile content in a range of 20 parts by weight to 50 parts by weight, based on 100 parts by weight of the HNBR.

The acrylonitrile content in the HNBR is an important factor in determining low-temperature properties of the HNBR. As the acrylonitrile content in the HNBR is high, a glass transition temperature may increase. Considering the usage conditions of body contact component of the wearable device, it is desirable that a glass transition temperature value is equal to or less than about 20 degrees. Accordingly, the acrylonitrile content in the HNBR may be in a range of 20 parts by weight to 50 parts by weight, based on 100 parts by weight of the HNBR.

Based on 100 parts by weight of the HNBR, when the acrylonitrile content is less than 20 parts by weight, chemical resistance may be reduced, and when the acrylonitrile content is more than 50 parts by weight, the glass transition temperature may increase and the low-temperature properties may deteriorate.

Based on 100 parts by weight of the HNBR, the acrylonitrile content in the HNBR may be in a range of 25 parts by weight to 50 parts by weight, 30 parts by weight to 50 parts by weight, 35 parts by weight to 45 parts by weight, 40 parts by weight to 50 parts by weight, 45 parts by weight to 50 parts by weight, 20 parts by weight to 45 parts by weight, 20 parts by weight to 40 parts by weight, 20 parts by weight to 35 parts by weight, 20 parts by weight to 30 parts by weight, 20 parts by weight to 25 parts by weight, 25 parts by weight to 45 parts by weight, 30 parts by weight to 40 parts by weight, or 34 parts by weight to 36 parts by weight.

In the composition for the body contact component of the wearable device according to an embodiment, the HNBR may have a residual double bond content in a range of 0.9% to 2.0%.

HNBR, is a synthetic polymer made by saturating carbon-carbon double bonds of nitrile rubber (NBR) with hydrogen, and therefore, it contains double bonds that are not fully hydrogenated, which are residual double bonds. The content (amount) of residual double bonds determines acid resistance and heat resistance characteristics of the HNBR.

Considering the usage environment of a body contact component of the wearable device, strong resistance to air (oxygen) or sweat (moisture, acid) is desirable because it may be in contact with the human body and exposed to the outside for a long time.

The content of residual double bonds in the HNBR of the composition for the body contact component of the wearable device affects an elongation change rate of the body contact component of the wearable device manufactured using the composition for the body contact component of the wearable device. As the content of residual double bonds in the HNBR of the composition for the body contact component of the wearable device is small, the elongation change rate of the body contact component of the wearable device manufactured using the composition for the body contact component of the wearable device tends to be relatively low. Accordingly, it is desirable for the content of residual double bonds to be maintained at or below a predetermined level. The content of residual double bonds affects a deviation in a color difference value of the component, and the smaller the content of residual double bonds, the smaller the deviation of the color difference value tends to be. This may be verified through an artificial sweat stress test, in which the component is exposed to artificial sweat having salinity and acidity levels similar to those of actual sweat, including lactic acid (pH of approximately 2), followed by measuring the change in the color difference value.

Considering the actual usage environment of the body contact component of the wearable device exposed to sweat, the content of residual double bonds in the HNBR of the composition for the body contact component of the wearable device may be equal to or less than 2.0%. The content of residual double bonds in the HNBR of the composition for the body contact component of the wearable device does not have a technical lower limit, but it may be equal to or greater than 0.9% to prevent over-reaction during an actual hydrogenation process and to secure productivity.

In embodiments, the HNBR may have a residual double bond content in a range of 0.9% to 1.7%, 0.9% to 1.5%, 0.9% to 1.3%, 0.9% to 1.1%, 1.1% to 2.0%, 1.3% to 2.0%, 1.5% to 2.0%, 1.7% to 2.0%, 1.8% to 2.0%, 1.1% to 1.7%, or 1.3% to 1.5%.

In the composition for the body contact component of the wearable device according to an embodiment, an amount of the HNBR may be in a range of 30 parts by weight to 70 parts by weight, based on 100 parts by weight of the composition.

In addition to the HNBR, the composition for the body contact component of the wearable device according to an embodiment may include the high-specific gravity inorganic additive as a specific gravity adjuster, as an acid-resistant additive for supplementing acid resistance, and as a light stabilizer as an additive for improving light stability. Therefore, in the composition for the body contact component of the wearable device according to an embodiment, an amount of the HNBR may be in a range of 30 parts by weight to 70 parts by weight, based on 100 parts by weight of the composition.

In the composition for the body contact component of the wearable device according to an embodiment, an amount of the HNBR may be equal to or greater than 30 parts by weight, based on 100 parts by weight of the composition, as it is a component that determines the basic physical properties of the body contact component of the wearable device, and an amount thereof may also be equal to or less than 70 parts by weight, based on 100 parts by weight of the composition, taking into account contents of the high-specific gravity inorganic additive that is added, as well as other additives that may be optionally or selectively added. When an amount of the HNBR in the composition is less than 30 parts by weight, the relative amount of the high-specific gravity inorganic additive may increase, which may result in lower intermolecular bonding strength, and when an amount of the HNBR in the composition is greater than 70 parts by weight, the relative amount of the high-specific gravity inorganic additive may decrease, which may result in failure to achieve a target specific gravity.

In the composition for the body contact component of the wearable device, based on 100 parts by weight of the composition, an amount of the HNBR may be in a range of 30 parts by weight to 65 parts by weight, 30 parts by weight to 60 parts by weight, 30 parts by weight to 55 parts by weight, 30 parts by weight to 50 parts by weight, 30 parts by weight to 45 parts by weight, 35 parts by weight to 70 parts by weight, 40 parts by weight to 70 parts by weight, 45 parts by weight to 70 parts by weight, 50 parts by weight to 70 parts by weight, 55 parts by weight to 70 parts by weight, 60 parts by weight to 70 parts by weight, 35 parts by weight to 65 parts by weight, 40 parts by weight to 60 parts by weight, 45 parts by weight to 55 parts by weight, or 48 parts by weight to 52 parts by weight.

In the composition for the body contact component of the wearable device according to an embodiment, the high-specific gravity inorganic additive may include at least one of titanium dioxide, silicon dioxide, zinc oxide, barium sulfate, or lithopone.

As described above, while HNBR has various advantages for use as the body contact component of the wearable device, the specific gravity thereof is lower than the specific gravity of FKM, and thus, it requires supplementation in terms of wearing comfort as the body contact component of the wearable device, for example, the wrap-around feel when used on the wrist. Therefore, the composition for the body contact component of the wearable device according to an embodiment may include the high-specific gravity inorganic additive, and the high-specific gravity inorganic additive may include at least one of titanium dioxide, silicon dioxide, zinc oxide, barium sulfate, or lithopone.

Since the body contact component of the wearable device directly contacts the human body and the skin is exposed to the body contact component of the wearable device for a long period of time due to the nature of its use, environmental friendliness and non-toxicity to human body are desirable qualities. As an example, barium sulfate is a substance that has a high specific gravity of 4.5 and is verified to have environmental friendliness and non-toxicity to human body to the extent that it is used as a gastrointestinal contrast agent, and thus, it may be used as an additive to the composition for the body contact component of the wearable device of the disclosure.

In the composition for the body contact component of the wearable device according to an embodiment, an amount of the high-specific gravity inorganic additive may be in a range of 25 parts by weight to 50 parts by weight, based on 100 parts by weight of the composition.

In the composition for the body contact component of the wearable device, when an amount of the high-specific gravity inorganic additive is small, an effect of improving the specific gravity of the entire composition for the body contact component of the wearable device may be insufficient, and when the content of the high-specific gravity inorganic additive is great, the bonding force between molecules may be reduced, mechanical properties (for example, tensile strength) of the body contact component of the wearable device manufactured using the composition for the body contact component of the wearable device may be reduced, and intermolecular voids may be generated, which may reduce acid resistance and durability. Therefore, in the composition for the body contact component of the wearable device according to an embodiment, an amount of the high-specific gravity inorganic additive may be in a range of 25 parts by weight to 50 parts by weight, based on 100 parts by weight of the composition. It was confirmed through experiments that, as the content of barium sulfate as the high-specific gravity inorganic additive in the composition for the body contact component of the wearable device increases, dimensional changes and weight changes caused by artificial sweat become greater (reduction in chemical resistance and stability). It was confirmed through experiments that, as the content of barium sulfate as the high-specific gravity inorganic additive in the composition for the body contact component of the wearable device increases, the tensile strength of the body contact component of the wearable device manufactured by the composition for the body contact component of the wearable device also decreases.

In the composition for the body contact component of the wearable device according to the disclosure, when an amount of the high-specific gravity inorganic additive is less than 25 parts by weight based on 100 parts by weight of the composition, a target specific gravity required for the body contact component of the wearable device may not be achieved, and when the amount of the high-specific gravity inorganic additive is greater than 50 parts by weight based on 100 parts by weight of the composition, the content of HNBR may be relatively low, intermolecular bonding force may be reduced, and the physical properties of the body contact component of the wearable device may be degraded.

In the composition for the body contact component of the wearable device, based on 100 parts by weight of the composition, an amount of the high-specific gravity inorganic additive may be in a range of 25 parts by weight to 45 parts by weight, 25 parts by weight to 40 parts by weight, 25 parts by weight to 35 parts by weight, 25 parts by weight to 30 parts by weight, 30 parts by weight to 40 parts by weight, 30 parts by weight to 50 parts by weight, 35 parts by weight to 50 parts by weight, 40 parts by weight to 50 parts by weight, 45 parts by weight to 50 parts by weight, 30 parts by weight to 45 parts by weight, or 35 parts by weight to 40 parts by weight.

In the composition for the body contact component of the wearable device according to an embodiment, the composition may be a per- and polyfluoroalkyl substance-free (PFAS-free) composition.

FKM, which is used as a material for a body contact component of a wearable device due to its excellent properties such as high specific gravity, good physical properties, and wearing comfort, is a PFAS. Since it is difficult to biodegrade and has the potential to cause liver damage, kidney cancer, and thyroid diseases due to bioaccumulation upon prolonged exposure to the human body, there is a need to replace it. Accordingly, the composition for the body contact component of the wearable device according to an embodiment of the disclosure may not contain a PFAS.

The composition for the body contact component of the wearable device according to an embodiment may include an acid-resistant additive, a light stabilizer, or both as other additives. Considering the usage conditions of the body contact component of the wearable device, there is a possibility of discoloration by acidic sweat (pH of 5 to 6). Accordingly, in order to prevent or reduce such discoloration, a phenolic antioxidant, which exhibits excellent high-temperature stability and prevents oxidation by removing hydroxyl radicals, may be included as an acid-resistant additive. The antioxidant may be a phenolic antioxidant that prevents oxidation by removing hydroxyl radicals and has excellent high-temperature stability. In an example, the phenolic antioxidant may include at least one of butylated hydroxytoluene (BHT: CAS No. 128-37-0), butylated hydroxyanisole (BHA), and tertiary butylhydroquinone (TBHQ).

The composition for the body contact component of the wearable device according to an embodiment may include a light stabilizer to prevent or reduce the discoloration caused by exposure to an external environment. An ultraviolet (UV) absorber may be included to prevent the discoloration caused by various additives introduced during a molding process of the body contact component of the wearable device. The UV absorber may selectively absorb UV rays from sunlight and convert the UV rays into thermal energy or eliminate free radicals generated through decomposition by UV rays, thereby preventing or reducing the aging and degradation of the body contact component of the wearable device from the UV rays. The UV absorber may be, for example, benzophenone, benzotriazole, or salicylate, and may absorb UV rays having a wavelength in a range of 270 nm to 380 nm.

The composition for the body contact component of the wearable device according to an embodiment of the disclosure may include, based on 100 parts by weight of the composition, 60 parts by weight to 70 parts by weight of HNBR; and 30 parts by weight to 40 parts by weight of barium sulfate; the HNBR may have an acrylonitrile content in a range of 35% parts by weight to 45% parts by weight based on 100 parts by weight of the HNBR, and a residual double bond content in a range of 1.8% to 2.0%; and the composition may have a specific gravity in a range of 1.5 to 1.7.

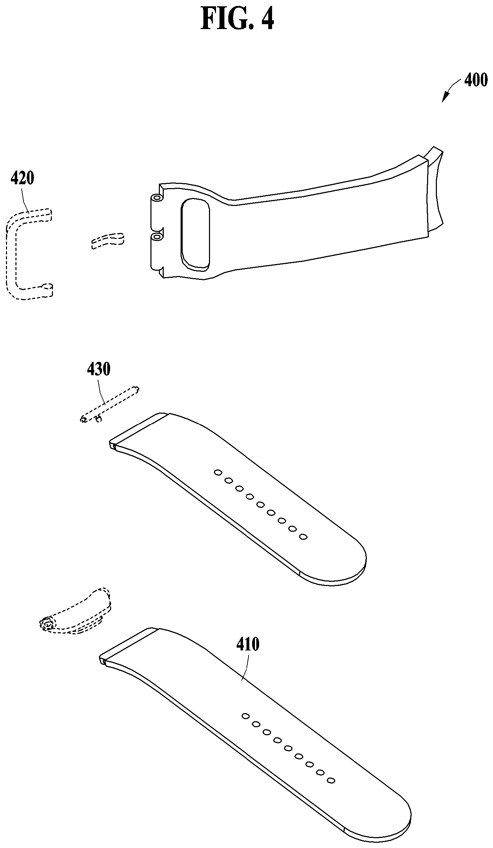

FIG. 4 is a schematic diagram of a smart watch strap 400 as an example of a body contact component of a wearable device according to embodiments. The smart watch strap 400 is an example of the body contact component of the wearable device manufactured using the composition for the body contact component of the wearable device of the disclosure. Considering the usage aspect, it may be wrapped around the wrist due to a specific gravity of at least a predetermined level, and may exhibit resistance to exposure to external environments such as sunlight and exposure to sweat caused by prolonged use. FIG. 4 illustrates a strap (band) 410 of a smart watch as an example, but since a rear surface of a smart watch body is also a portion that comes into direct contact with the human body, the rear surface of the smart watch may also be an embodiment of the body contact component of the wearable device according to the disclosure. Furthermore, portions such as a loop 420 and a hinge 430 of the smart watch strap may also be manufactured by the composition for the body contact component of the wearable device according to the disclosure.

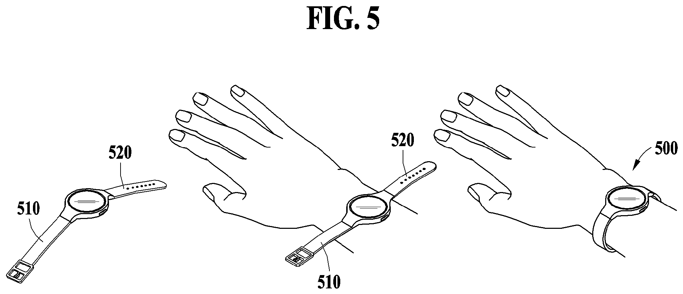

FIG. 5 is a schematic diagram of a smart watch including a smart watch strap 500, as an example of a body contact component of a wearable device, according to embodiments, as it is worn. FIG. 5 illustrates that the smart watch is worn by inserting a loop (buckle) connected to a first strap 510 into a hole of a second strap 520, in as same manner as in a case of the wearing of a typical wristwatch. However, this is merely an example, and embodiments of the body contact component of the wearable device of the disclosure may include all body contact components of the wearable device that are worn by combining in various ways.

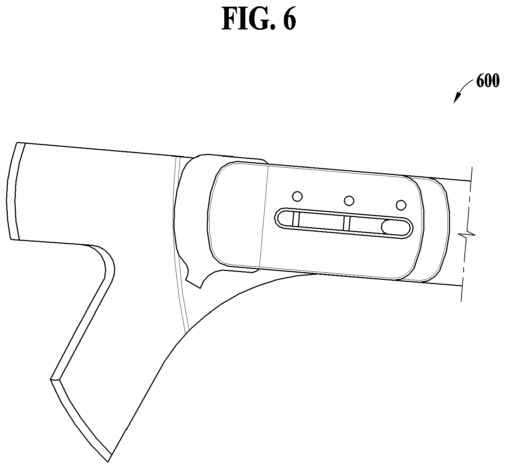

FIG. 6 is an enlarged schematic diagram of a portion of a body contact component of a wearable device according to embodiments that contacts a head of a head mount. Depending on the type and shape of the head mount, a portion that contacts the skin of the head and a degree of contact may vary greatly, and FIG. 6 is an enlarged schematic diagram of a portion of a head mount that contacts the skin near a user's temple. The portion shown in FIG. 6 may correspond to the body contact component of the wearable device according to the disclosure, or only a portion of the head mount shown in FIG. 6 that directly contacts the skin may be configured as the body contact component of the wearable device according to the disclosure.

The body contact component of the wearable device according to an embodiment may include HNBR, and a high-specific gravity inorganic additive, and the body contact component may have a specific gravity in a range of 1.5 to 2.0.

The body contact component of the wearable device according to an embodiment may be manufactured through a molding process of the composition for the body contact component of the wearable device according to an embodiment, and is not limited to a specific shape or product. In the body contact component of the wearable device according to an embodiment, the specific gravity in a range of 1.5 to 2.0 may refer to the specific gravity when excluding metal components such as rings and buckles that are coupled to and used in the body contact component of the wearable device according to an embodiment.

The body contact component of the wearable device according to an embodiment of the disclosure exhibits physical properties of the composition for the body contact component of the wearable device according to an embodiment. Although additional characteristics may be obtained through the formation of a coating layer to be described later, characteristics such as the specific gravity, acid resistance, non-toxicity to the human body, and tensile strength of the body contact component of the wearable device may be the same as those of the composition for the body contact component of the wearable device according to an embodiment.

In the body contact component of the wearable device according to an embodiment, the body contact component of the wearable device may have a tensile strength in a range of 10 MPa to 20 MPa. As described above, the tensile strength of the body contact component of the wearable device is imparted by the content of HNBR and the content of residual double bonds in the HNBR, in the composition for the body contact component of the wearable device.

In embodiments, the tensile strength of the body contact component of the wearable device may be in a range of 10 MPa to 20 MPa, 12 MPa to 20 MPa, 14 MPa to 20 MPa, 16 MPa to 20 MPa, 18 MPa to 20 MPa, 10 MPa to 18 MPa, 10 MPa to 16 MPa, 10 MPa to 14 MPa, 10 MPa to 12 MPa, 12 MPa to 18 MPa, or 14 MPa to 16 MPa.

In the body contact component of the wearable device according to an embodiment, the body contact component of the wearable device may further include a coating layer on a surface thereof (e.g., on an outermost surface of the body contact component), and the body contact component of the wearable device may have a surface roughness equal to or less than 20 µm.

The coating layer may protect the body contact component of the wearable device from ambient conditions, foreign matter, and/or the environment, and may also provide a predetermined degree of surface roughness to prevent or reduce slippage. For example, due to the characteristics of HNBR, if there is sweat or moisture on the wrist or head when wearing it, it may be difficult to wear as it may slip, and thus, it may be necessary to have a predetermined degree of surface roughness. Therefore, the body contact component of the wearable device according to an embodiment of the disclosure may include the coating layer having a surface roughness equal to or less than 20 µm or less.

In the body contact component of the wearable device according to an embodiment, the coating layer may include at least one of urethane, urethane acrylate, and silicone, may be a transparent layer having a thickness in a range of 10 µm to 30 µm, and may have a heat resistance equal to or greater than 100°C or higher.

When the thickness of the coating layer is thinner than 10 µm, the coating layer itself may be susceptible to damage, and when the thickness of the coating layer is thicker than 30 µm, tactile sensation may be deteriorated and there may be increased slippage while the body contact component is worn.

In embodiments, the thickness of the coating layer may be in a range of 10 µm to 30 µm, 15 µm to 30 µm, 20 µm to 30 µm, 25 µm to 30 µm, 10 µm to 25 µm, 10 µm to 20 µm, 10 µm to 15 µm, 15 µm to 25 µm, or 18 µm to 22 µm.

In the body contact component of the wearable device according to an embodiment, the body contact component of the wearable device may have a surface hardness in a range of 60 Shore hardness to 100 Shore hardness. The surface hardness may be a surface hardness of the body contact component of the wearable device that does not include the coating layer, or when the coating layer is included, the surface hardness may be a surface hardness of the coating layer of the body contact component of the wearable device.

Depending on the type of body contact component of an actual wearable device, the surface hardness may vary, and in embodiments, the surface hardness may be in a range of 60 Shore hardness to 100 Shore hardness, 65 Shore hardness to 100 Shore hardness, 70 Shore hardness to 100 Shore hardness, 75 Shore hardness to 100 Shore hardness, 80 Shore hardness to 100 Shore hardness, 85 Shore hardness to 100 Shore hardness, 90 Shore hardness to 100 Shore hardness, 95 Shore hardness to 100 Shore hardness, 60 Shore hardness to 95 Shore hardness, 60 Shore hardness to 90 Shore hardness, 60 Shore hardness to 85 Shore hardness, 60 Shore hardness to 80 Shore hardness, 60 Shore hardness to 75 Shore hardness, 60 Shore hardness to 70 Shore hardness, 65 Shore hardness to 95 Shore hardness, 70 Shore hardness to 90 Shore hardness, 75 Shore hardness to 85 Shore hardness, or 78 Shore hardness to 82 Shore hardness.

In the body contact component of the wearable device according to an embodiment, the body contact component of the wearable device may be a strap, a headset, a head mount, a glove, an earpiece, smart glasses, smart goggles, a body-attachable sensor, an e-skin, an attachable wearable patch, or a portion thereof. However, the body contact component of the wearable device according to the disclosure is not limited thereto, and may encompass all components of various devices used in contact with the human body regardless of the contact time, method, or contact area on the human body. The body contact component of the wearable device of the disclosure may occupy almost the entire wearable device, in addition to small components coupled to the entire wearable device.

The strap of the wearable device according to an embodiment may include HNBR, barium sulfate, and a silicone coating layer formed on an outermost surface of the strap. Based on 100 parts by weight of the strap, the strap may include 60 parts by weight to 70 parts by weight of the HNBR, and 30 parts by weight to 40 parts by weight of the barium sulfate. The HNBR may have an acrylonitrile content in a range of 35% parts by weight to 45% parts by weight, based on 100 parts by weight of the HNBR, and the HNBR may have a residual double bond content in a range of 1.8% to 2.0%. The strap may have a specific gravity in a range of 1.5 to 1.7, a tensile strength in a range of 10 MPa to 20 MPa, and a surface hardness in a range of 60 Shore hardness to 75 Shore hardness. The coating layer may be a transparent layer having a thickness in a range of 10 µm to 30 µm, a heat resistance equal to or greater than 100°C, and a surface roughness equal to or less than 20 µm.

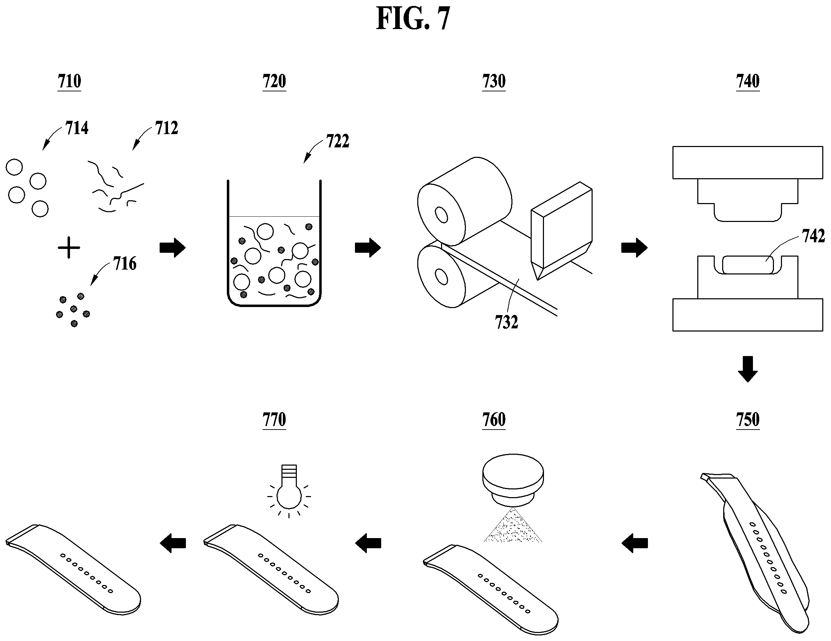

FIG. 7 is a schematic diagram of a method of manufacturing a smart watch strap as an example of a body contact component of a wearable device according to embodiments.

A method of manufacturing a body contact component of a wearable device according to an embodiment may include operation 710 of preparing a composition by mixing HNBR and a high-specific gravity inorganic additive; operation 720 of manufacturing a sheet by extruding the composition; operations 730 and 740 of compress-molding the sheet; operation 750 of manufacturing a molded product by cutting the compress-molded sheet; operation 760 of forming a coating layer on a surface of the molded product; and operation 770 of drying the molded product on which the coating layer is formed.

In an embodiment, the coating layer may include a silicone-based material, may be a transparent layer having a thickness in a range of 10 µm to 30 µm, and may have a heat resistance equal to or greater than 100°C.

Referring to FIG. 7, in an embodiment, a process of manufacturing the body contact component of the wearable device of the disclosure using the composition for the body contact component of the wearable device according to embodiments is described as follows. The operations are described below as proceeding in order, but the order may be changed or the operations may be performed simultaneously as necessary.

A composition 722 was prepared by mixing HNBR 712 and a high-specific gravity inorganic additive 714 (720). Based on 100 parts by weight of the composition, 65 parts by weight of HNBR and 35 parts by weight of barium sulfate, as the high-specific gravity inorganic additive, were mixed. The HNBR has an acrylonitrile content of 40 parts by weight based on 100 parts by weight of HNBR and a residual double bond content of 1.9%.

In order to manufacture a strap of a smart watch as a final molded product, BHT as an antioxidant 716 and benzophenone as a light stabilizer were added, taking into account physical properties (a tensile strength and a surface hardness) desired for the smart watch strap.

These were mixed, and an extruded sheet 732 (an elastomer sheet) was manufactured by an extrusion process (730). This was cut, and a cut extruded sheet 742 was placed into a strap mold and compressed (740), and an unnecessary portion of the strap shape was cut off (750).

To impart the surface roughness of 10 µm, which is the desired physical property of the strap, a coating layer having a thickness of 20 µm was formed using urethane acrylate by spraying (760). A spray coating layer was formed on both surfaces, taking into account the usage characteristics of the strap. The final product, the strap, was manufactured by drying at room temperature (770).

The specific gravity of the strap manufactured in this way was found to be 1.7, the surface roughness of the coating layer was measured to be 10 µm, and it exhibited a Shore hardness of 66 and a tensile strength of 13 MPa.

A composition for a body contact component of a wearable device according to an embodiment may include HNBR, and a high-specific gravity inorganic additive, and the composition may have a specific gravity in a range of 1.5 to 2.0.

In an embodiment, the HNBR may have an acrylonitrile content in a range of 20 parts by weight to 50 parts by weight, based on 100 parts by weight of the HNBR.

In an embodiment, the HNBR may have a residual double bond content in a range of 0.9% to 2.0%.

In an embodiment, an amount of the HNBR in the composition may be in a range of 30 parts by weight to 70 parts by weight, based on 100 parts by weight of the composition.

In an embodiment, the high-specific gravity inorganic additive may include at least one of titanium dioxide, silicon dioxide, zinc oxide, barium sulfate, or lithopone.

In an embodiment, an amount of the high-specific gravity inorganic additive may be in a range of 25 parts by weight to 50 parts by weight, based on 100 parts by weight of the composition.

In an embodiment, the composition may be a per- and polyfluoroalkyl substance-free composition.

A composition for a body contact component of a wearable device according to an embodiment may include, based on 100 parts by weight of the composition, 60 parts by weight to 70 parts by weight of HNBR, and 30 parts by weight to 40 parts by weight of barium sulfate. The HNBR may have an acrylonitrile content in a range of 35% parts by weight to 45% parts by weight based on 100 parts by weight of the HNBR, and a residual double bond content in a range of 1.8% to 2.0%; and the composition may have a specific gravity in a range of 1.5 to 1.7.

A body contact component of a wearable device according to an embodiment may include HNBR, and a high-specific gravity inorganic additive, and the body contact component may have a specific gravity in a range of 1.5 to 2.0.

In an embodiment, the body contact component of the wearable device may have a tensile strength in a range of 10 MPa to 20 MPa.

In an embodiment, the body contact component of the wearable device may further include a coating layer on a surface of the body contact component, and the coating layer may have a surface roughness equal to or less than 20 µm.

In an embodiment, the coating layer may include at least one of urethane, urethane acrylate, or silicone; the coating layer may be a transparent layer having a thickness in a range of 10 µm to 30 µm; and the coating layer may have a heat resistance equal to or greater than 100°C.

In an embodiment, the body contact component of the wearable device may have a surface hardness in a range of 60 Shore hardness to 75 Shore hardness.

In an embodiment, the body contact component of the wearable device may be a strap, a headset, a head mount, a glove, an earpiece, smart glasses, smart goggles, a body-attachable sensor, an attachable wearable patch, or a portion thereof.

A strap of a wearable device according to an embodiment may include HNBR, barium sulfate, and a silicone coating layer on an outermost surface of the strap. Based on 100 parts by weight of the strap, the strap may include 60 parts by weight to 70 parts by weight of the HNBR, and 30 parts by weight to 40 parts by weight of the barium sulfate. The HNBR may have an acrylonitrile content in a range of 35% parts by weight to 45% parts by weight, based on 100 parts by weight of the HNBR, and the HNBR may have a residual double bond content in a range of 1.8% to 2.0%. The strap may have a specific gravity in a range of 1.5 to 1.7, a tensile strength in a range of 10 MPa to 20 MPa, and a surface hardness in a range of 60 Shore hardness to 75 Shore hardness. The coating layer may be a transparent layer having a thickness in a range of 10 µm to 30 µm, may have a heat resistance equal to or greater than 100°C, and may have a surface roughness equal to or less than 20 µm.

A method of manufacturing a body contact component of a wearable device according to an embodiment may include preparing a composition by mixing HNBR and a high-specific gravity inorganic additive; manufacturing a sheet by extruding the composition; compress-molding the sheet; manufacturing a molded product by cutting the compress-molded sheet; forming a coating layer on a surface of the molded product; and drying the molded product on which the coating layer is formed.

In an embodiment, the coating layer may include a silicone-based material, may be a transparent layer having a thickness in a range of 10 µm to 30 µm, and may have a heat resistance equal to or greater than 100°C.

The electronic device according to the embodiments disclosed herein may be one of various types of electronic devices. The electronic device may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more of functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. A machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

While embodiments have been illustrated and described above, the disclosure is not limited to the aforementioned specific embodiments. Those skilled in the art should appreciate that various modifications may be made to the embodiments without departing from the subject matter of the disclosure as defined by the appended claims, and also that such modifications are not to be understood individually from the technical spirit or prospect of the disclosure.

## Claims

1. A composition for a body contact component of a wearable device, the composition comprising:
hydrogenated nitrile butadiene rubber (HNBR); and
a high-specific gravity inorganic additive,
wherein the composition has a specific gravity in a range of 1.5 to 2.0.

2. The composition of claim 1, wherein the HNBR has an acrylonitrile content in a range of 20 parts by weight to 50 parts by weight, based on 100 parts by weight of the HNBR.

3. The composition of claim 1, wherein the HNBR has a residual double bond content in a range of 0.9% to 2.0%.

4. The composition of claim 1, wherein an amount of the HNBR in the composition is in a range of 30 parts by weight to 70 parts by weight, based on 100 parts by weight of the composition.

5. The composition of claim 1, wherein:
the high-specific gravity inorganic additive comprises at least one of titanium dioxide, silicon dioxide, zinc oxide, barium sulfate, or lithopone, and
an amount of the high-specific gravity inorganic additive in the composition is in a range of 25 parts by weight to 50 parts by weight, based on 100 parts by weight of the composition.

6. The composition of claim 1, wherein the composition is a per- and polyfluoroalkyl substance-free composition.

7. A composition for a body contact component of a wearable device, the composition comprising, based on 100 parts by weight of the composition:
60 parts by weight to 70 parts by weight of hydrogenated nitrile butadiene rubber (HNBR); and
30 parts by weight to 40 parts by weight of barium sulfate,
wherein the HNBR has an acrylonitrile content in a range of 35% parts by weight to 45% parts by weight, based on 100 parts by weight of the HNBR,
wherein the HNBR has a residual double bond content in a range of 1.8% to 2.0%, and
wherein the composition has a specific gravity in a range of 1.5 to 1.7.

8. A body contact component of a wearable device, the body contact component comprising:
hydrogenated nitrile butadiene rubber (HNBR); and
a high-specific gravity inorganic additive,
wherein the body contact component has a specific gravity in a range of 1.5 to 2.0.

9. The body contact component of claim 8, wherein the body contact component of the wearable device has a tensile strength in a range of 10 MPa to 20 MPa.

10. The body contact component of claim 8, further comprising:
a coating layer on a surface of the body contact component,
wherein the coating layer has a surface roughness equal to or less than 20 µm,
wherein the coating layer comprises at least one of urethane, urethane acrylate, or silicone,
wherein the coating layer is a transparent layer having a thickness in a range of 10 µm to 30 µm, and
wherein the coating layer has a heat resistance equal to or greater than 100°C.

11. The body contact component of claim 8, wherein the body contact component has a surface hardness in a range of 60 Shore hardness to 75 Shore hardness.

12. The body contact component of claim 8, wherein the body contact component is a strap, a headset, a head mount, a glove, an earpiece, smart glasses, smart goggles, a body-attachable sensor, an attachable wearable patch, or a portion thereof.

13. A strap of a wearable device, comprising:
hydrogenated nitrile butadiene rubber (HNBR);
barium sulfate; and
a silicone coating layer on an outermost surface of the strap,
wherein, based on 100 parts by weight of the strap, the strap comprises:
60 parts by weight to 70 parts by weight of the HNBR; and
30 parts by weight to 40 parts by weight of the barium sulfate,
wherein the HNBR has an acrylonitrile content in a range of 35% parts by weight to 45% parts by weight, based on 100 parts by weight of the HNBR,
wherein the HNBR has a residual double bond content in a range of 1.8% to 2.0%,
wherein the strap has a specific gravity in a range of 1.5 to 1.7,
wherein the strap has a tensile strength in a range of 10 MPa to 20 MPa,
wherein the strap has a surface hardness in a range of 60 Shore hardness to 75 Shore hardness,
wherein the coating layer is a transparent layer having a thickness in a range of 10 µm to 30 µm,
wherein the coating layer has a heat resistance equal to or greater than 100°C, and
wherein the coating layer has a surface roughness equal to or less than 20 µm.

14. A method of manufacturing a body contact component of a wearable device, the method comprising:
preparing a composition by mixing hydrogenated nitrile butadiene rubber (HNBR) and a high-specific gravity inorganic additive;
manufacturing a sheet by extruding the composition;
compress-molding the sheet;
manufacturing a molded product by cutting the compress-molded sheet;
forming a coating layer on a surface of the molded product; and
drying the molded product on which the coating layer is formed.

15. The method of claim 14, wherein:
the coating layer comprises a silicone-based material,
the coating layer is a transparent layer having a thickness in a range of 10 µm to 30 µm, and
the coating layer has a heat resistance equal to or greater than 100°C.
